(19) Europäisches Patentamt
European Patent Office
Office européen des brevets

(11) Veröffentlichungsnummer: **0 538 555 B1**

(12) # EUROPÄISCHE PATENTSCHRIFT

(45) Veröffentlichungstag der Patentschrift: **06.09.95**

(51) Int. Cl.$^6$: **C04B 41/49**, C07F 7/18

(21) Anmeldenummer: **92109771.3**

(22) Anmeldetag: **10.06.92**

(54) **Wässrige, Organosiliciumverbindungen enthaltende Emulsionen zum Imprägnieren von anorganischen Materialien, insbesondere von Baumaterialien.**

(30) Priorität: **05.07.91 DE 4122263**

(43) Veröffentlichungstag der Anmeldung:
**28.04.93 Patentblatt 93/17**

(45) Bekanntmachung des Hinweises auf die Patenterteilung:
**06.09.95 Patentblatt 95/36**

(84) Benannte Vertragsstaaten:
**AT BE CH DE DK ES FR GB IT LI NL PT SE**

(56) Entgegenhaltungen:
**EP-A- 0 340 816**
**EP-A- 0 416 402**
**FR-A- 1 550 037**
**FR-A- 2 484 425**
**US-A- 4 648 904**

(73) Patentinhaber: **DEGUSSA AKTIENGESELL-SCHAFT**
**Postfach 11 05 33**
**D-60040 Frankfurt (DE)**

(72) Erfinder: **Göbel, Thomas, Dr.**
**Birkenweg 1**
**W-6450 Hanau 9 (DE)**
Erfinder: **Michel, Rudolf**
**Josefstrasse 36**
**W-6463 Freigericht 1 (DE)**
Erfinder: **Alff, Harald**
**Bahnhofstrasse 6a**
**W-8756 Kahl am Main (DE)**
Erfinder: **Karl, Josef**
**Gartenstrasse 11**
**W-8755 Alzenau-Hörstein (DE)**

EP 0 538 555 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Anmeldung betrifft wässrige.

Organosiliciumverbindungen enthaltende Emulsionen, die sich zum Imprägnieren von anorganischen Materialien, insbesondere von Baumaterialien eignen, die Herstellung spezieller Organosiliciumverbindung und die Verwendung der Emulsionen.

Während in der Vergangenheit Mittel zum Imprägnieren von Mauerwerk, Beton etc. häufig organische Lösungsmittel enthielten (DE-PS 20 29 446), vermeidet man dies bei den neueren Entwicklungen zunehmend. Die DE-PS 27 51 714 betrifft ein Imprägnierungsmittel für poröse Materialien, das aus einer Emulsion von Alkoxysilanen in Wasser oder Wasser-Alkoholmischungen besteht, und das ein Tensid als Emulgiermittel enthält. Nachteil dieser Mittel ist jedoch häufig, daß der Tensidzusatz den Hydrophobierungseffekt des Alkoxysilans herabsetzt, und daß die Eindringtiefe dieser Mittel ungenügend ist. Die Einführung wasserlöslicher Gruppen in Polysiloxane (sog. "Silicontenside") gemäß US-PS 46 61 551 führt zwar zu beliebig verdünnbaren Mikroemulsionen, die allerdings nach 12 - 24 h appliziert werden müssen.

Weiterhin sind gemäß FR-A-2 484 425 und FR-A-1 550 037 oberfleichenaktive Organopolysiloxane bekannt, die Polyoxyalkylengrüppen aufweisen.

In den europäischen Patentanmeldungen EP-A-234 024 und EP-A-340 816 werden Silan-haltige wässrige Emulsionen beschrieben, die man unter Verwendung bestimmter Tenside herstellen kann.

Emulsionen gemäß der EP-A-340 816 enthalten zusätzlich eine den pH-Wert puffernde Substanz, um die Lagerstabilität zu erhöhen.

Aufgabe der Erfindung ist es, Emulsionen als Imprägniermittel von anorganischen Materialien, insbesondere von Baumaterialien bereitzustellen, die eine gegenüber den aus dem Stand der Technik bekannten Mitteln verbesserte Wirkung zeigen. Gegenstand der Erfindung sind wässrige, Organosiliciumverbindungen enthaltende Emulsionen zum Imprägnieren von Baumaterialien, die gegebenfalls anionische Tenside und den pH-Wert puffernde Substanzen enthalten, dadurch gekennzeichnet,

daß sie 1 bis 80 Gew.-%, insbesondere von 1 bis 60 Gew.-%, bezogen auf die Gesamtmenge, mindestens eines Alkoxysilans der allgemeinen Formel

$$(R_1O)_{4-(a+b)}\ \overset{\overset{(R_3)_a}{|}}{Si} - ((CH_2)_c-X)_b \qquad (I).$$

in der bedeuten

- $R_1$: $C_1$-$C_3$-Alkyl
- $R_3$: $C_1$-$C_{20}$-Alkyl, geradkettig oder verzweigt, insbesondere $C_1$-$C_{10}$-Alkyl, Phenyl
- X: H, Cl, Br, J, $NH_2$, SCN, CN, $N_3$, NHR, $NR_2$, $^{\oplus}NR_3$, $-S_x$, Aryl, Alkenyl, insbesondere H, Cl
- a: 0,1
- b: 1,2 , wobei a + b bevorzugt gleich 1 oder 2 ist,
- x,c: eine ganze Zahl von 1 bis 6,

1 bis 20 Gew.-%, vorzugsweise 1 bis 5 Gew.-%, einer Organosiliciumverbindung der allgemeinen Formel

$$(R_4)_{3-(m+n)} - \underset{\underset{(R_3)_m}{|}}{\overset{\overset{(R_2)_n}{|}}{Si}} - (CH_2)_p\ \{OCH_2-CH_2\}_r\ OR_5 \qquad (II),$$

in der bedeuten:

- $R_2$, $R_3$: gleich oder verschieden, $C_1$-$C_{20}$-Alkyl, gerad kettig oder verzweigt, insbesondere $C_1$-$C_{10}$-Alkyl, Phenyl,
- $R_4$: $C_1$-$C_3$- Alkoxy,

$\{OCH_2\text{-}CH_2\}_r\ OR_5$,

$$[OCH_2-CH_2]_s-[CH_2-\underset{\displaystyle CH_3}{\underset{|}{C}}HO]_t-[CH_2-CH_2O]_sH,$$

R5: H, $C_1$-$C_{20}$-Alkyl, $C_2$-$C_{36}$-Alkenyl, $C_5$-$C_8$-Cycloalkyl, $C_7$-$C_{36}$-Aralkyl, insbesondere durch Alkylgruppen substituierte Benzylreste und Phenylreste, wobei die Alkylgruppen gegebenenfalls auch verzweigt sind, mit p = 0 und r = 0 bedeutet $OR_5$:

$$[OCH_2-CH_2]_s-[CH_2-\underset{\displaystyle CH_3}{\underset{|}{C}}HO]_t\ [CH_2-CH_2O]_s\ H$$

mit s = 3-50, t = 3-25

- m: 0, 1, 2
- n: 0, 1, 2 , mit der Maßgabe, daß (m + n) = 1 oder 2 ist, wenn p = 0 ist, bei p ≠ 0 gilt (m + n) = 0, 1 oder 2,
- p: 0, 1, 2, 3
- r: eine ganze Zahl zwischen 0 und 50,

und Wasser in einer Menge von 1 - 95 Gew.-%, bevorzugt 1-75 Gew.-%, enthält, wobei sich die Gewichtsmengen natürlich auf 100 % ergänzen.

Die Emulsionen können neben den Verbindungen gemäß Formel (I) auch deren Ankondensationsprodukte enthalten, z. B. Dimere, Trimere oder andere Oligomere, wie sie dem Fachmann allgemein bekannt sind.

Der pH-Wert der Emulsion wird vorzugsweise auf etwa 7,5 eingestellt.

In einer besonderen Ausführungsform setzt man der Emulsion eine Puffersubstanz in einer Menge von 0,1 bis 5 Gew.-% zu, bezogen auf die Gesamtmenge der Emulsion.

Dabei handelt es sich beispielsweise um Natriumhydrogencarbonat, Natriumcarbonat oder Trinatriumphosphat.

In einer bevorzugten Ausführungsform setzt man der Emulsion auch 0,2 bis 8,0 Gew.%, bezogen auf das Gesamtgewicht der Emulsion, eines oder mehrere der bekannten anionischen Tenside zu.

Gegegebenfalls enthält die erfindungsgemäße Emulsion auch 0,1 bis 1,0 Gew.% eines bekannten Verdikkers, z. B.aus der Klasse der Cellulose- oder Stärkederivate, ebenfalls bezogen auf die Gesamtmenge der Emulsion.

Als Imprägniermittel besonders geeignet sind Emulsionen, die Verbindungen der allgemeinen Formel (II) enthalten, in der bedeuten:

wenn p ≠ 0 : (m + n) = 0 oder 1

wenn p = 0 : (m + n) = 1

Diese Verbindungen sind neu und werden ebenfalls beansprucht. Verbindungen des Typs, bei denen p = 0 und (m + n) = 2 entsprechen, sind in der EP-A-416 402 beschrieben.

Sie werden gemäß dieser Anmeldung in organischen Lösungsmitteln in Gegenwart von Basen hergestellt.

Gegenstand der Erfindung ist ebenso ein neues Verfahren zur Herstellung von Organosiliciumverbindungen gemäß der allgemeinen Formel (II), in der p = 0 bedeutet, das

dadurch gekennzeichnet

ist, daß man eine Verbindung der allgemeinen Formel

$$(R_6)_{4-(m+n)}-\overset{\displaystyle (R_2)_n}{\overset{|}{\underset{\displaystyle (R_3)_m}{\underset{|}{Si}}}} \qquad (III),$$

in der
$R_6$: $C_1$-$C_3$-Alkoxy entspricht und $R_2$, $R_3$, m und n die oben angegebene Bedeutung haben, mit einer reaktiven Wasserstoff enthaltenden Verbindung der allgemeinen Formel

$R_5$-O { $CH_2$-$CH_2$O}$_r$ H (IV),

in der $R_5$ und r die oben angegebenen Bedeutungen haben,
bei der Rückflußtemperatur des Reaktionsgemisches und einen pH-Wert zwischen 3,5 und 5,5, insbesondere ~ 5, umsetzt.
Ein organisches Lösungsmittel wird nicht benötigt. Man geht dabei im allgemeinen so vor, daß man das Organosilan und das Tensid mit einer geringen Menge einer Säure, z. B. HCl, auf den pH-Wert einstellt und dann aufheizt, bis die Rückflußtemperatur erreicht ist.
Die Reaktion läuft auch bei niedrigen Temperaturen ab, jedoch dann langsamer.
Nach dem Ende der Umsetzung wird der freigesetzte Alkohol, in den meisten Fällen Methanol oder Ethanol, abgezogen.
Das Tensid setzt man im allgemeinen in äquimolaren Mengen, bevorzugt in einem Überschuß von 0,1 bis 5 Mol % ein, wobei eine oder zwei Alkoxygruppen durch das Tensid ersetzt werden können.

Die Verbindungen gemäß der Formel (II) mit p = 0 können jedoch auch entsprechend dem aus EP-A-416 402 bekannten Verfahren hergestellt werden.

Ein weiterer Gegenstand der Erfindung ist ein Verfahren zur Herstellung von Organosiliciumverbindungen der allgemeinen Formel (II), in der p = 1, 2 oder 3 ist, das dadurch gekennzeichnet ist, daß man eine Verbindung der allgemeinen Formel

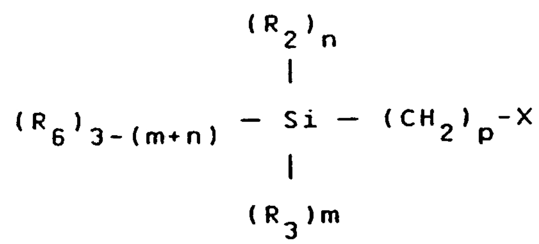

(V),

in der $R_2$, $R_3$ ,$R_6$, m, n und p (außer p = 0) die oben angegebenen Bedeutungen haben und X Cl entspricht, in einem inerten organischen Lösungsmittel mit einem Natriumalkoholat der allgemeinen Formel

$R_5$-O {$CH_2$-$CH_2$O}$_r$ Na (VI),

in der $R_5$ und r die oben genannten Bedeutungen haben, bei 20 bis 100 °C, vorzugsweise der Rückflußtemperatur, umsetzt, anschließend das ausgefallene NaCl abfiltriert und das Lösungsmittel abzieht.
Man geht bei diesem Verfahren in einer Variante so vor, daß man das Tensid in einem inerten organischen Lösungsmittel, z. B. aliphatischen cycloaliphatischen oder aromatischen Kohlenwasserstoffen, vorlegt, anschließend das Natrium in bevorzugt äquimolarer Menge einträgt und durch Aufheizen auf bis zu 90 °C die Alkoholatbildung unter Wasserstoffentwicklung in Gang setzt. Nach der vollständigen Umsetzung des Natriums kühlt man wieder bevorzugt auf Raumtemperatur ab und tropft die Organosiliciumverbindung gemäß Formel (V) in einer bevorzugt äquimolarer Menge zu. Nach dem Aufheizen auf 50 bis 60 °C fällt NaCl aus. Die gewünschte Verbindung wird dann nach dem Abfiltrieren des Salzes und dem Abtrennen des Lösungsmittels gewonnen.
Sie kann im Anschluß daran gemäß dem vorher beschriebenen Verfahren mit einem weiteren Tensid umgesetzt werden, das mit dem zuerst substituierten nicht identisch sein muß. Diese Verbindungen sind neu und werden ebenfalls beansprucht.

Es ist aber auch möglich, das Tensid mit Natriumethylat umzusetzen und so die Verbindung gemäß Formel (VI) herzustellen.
Die beanspruchten funktionellen Silicumtenside zeichnen sich durch eine ausgeprägte Emulgatorwirkung insbesondere im pH-Bereich zwischen 6 und 9 aus. Die unter ihrer Verwendung hergestellten Emulsionen zeigen sich in diesem pH-Bereich über Wochen als stabil. In bestimmten Anwendungsgebieten ist es erforderlich, daß diese erfindungsgemäßen Tenside unmittelbar nachdem die Organosilan-Emulsion ihren Zweck erfüllt hat, in grenzflächeninaktive Teilstücke gespalten werden. Die Stabilität einer Emulsion muß

dem Zweck ihrer Anwendung angepaßt werden. Nicht immer ist es zweckmäßig, eine möglichst stabile Emulsion herzustellen. Für eine Reihe von Anwendungsfeldern soll die Emulsion zwar unter ganz bestimmten Bedingungen stabil sein, nach dem Erreichen des Zwecks aber wieder in ihre Komponenten zerfallen (brechen). Die beanspruchten Emulsionen dienen dazu, poröse anorganische Materialien, z. B. natürliche Füllstoffe (Wollastonit, Talk u. a.), pulverförmige Kieselsäure oder Silikate in ihren Oberflächeneigenschaften derart zu verändern, daß sie für spezielle Anwendungsgebiete im Kautschuk-, Bitumen- und Polymerbereich als maßgeschneiderte Füllstoffe angewendet werden können. Bei Verwendung von Alkylalkoxysilanen können insbesondere Baumaterialien, Mauerwerk, Beton und Fassaden wasserabweisend ausgerüstet werden.

In einer bevorzugten Ausführungsform setzt man, insbesondere auch bei kurzkettigen,z. B. $C_3$- und $C_4$-Alkylengruppen-haltigen Silanen enthaltenden Emulsionen kurz vor der Anwendung einen sauren Katalysator zu, der fähig ist, die Si-O-Bindungen, nicht aber die Si-C-Bindungen in den beanspruchten Alkoxysilanen zu brechen um dadurch die Wirksamkeit der Silane auf neutralen, schwach sauren oder alkalischen, insbesondere problematischen Substraten zu erhöhen.

In einer speziellen Ausführungsform lassen sich bei Verwendung der silicium-funktionellen Tenside mit den allgemeinen Formeln

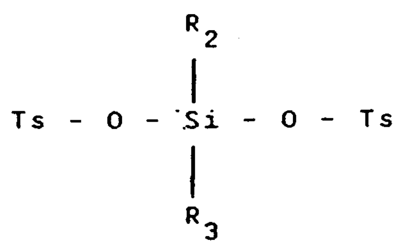

(VII)

oder

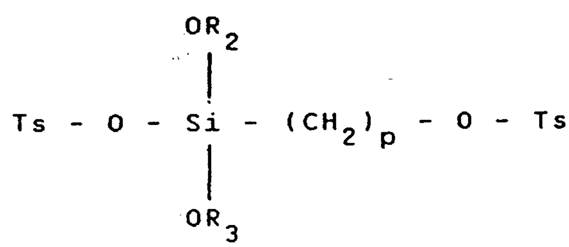

(VIII)

in der $R_2$, $R_3$ und p die Bedeutung wie oben besitzen und Ts entspricht:

$(CH_2CH_2O)_n$-$R_5$    n = 3 - 15,

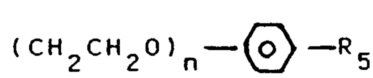

n = 3 - 15,

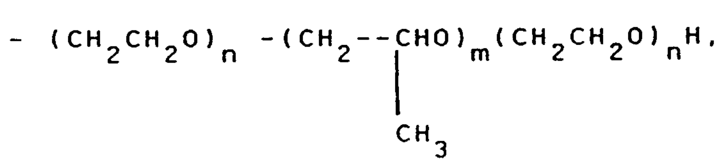

m = 3 - 50

n = 3 - 25

struktur-viskose Flüssigkeiten erzeugen, die den Zusatz von viskositätserhöhenden Mitteln überflüssig machen und bei Applikation in verdünnter Form das Anforderungsprofil nicht negativ beeinflussen. Sowohl Stabilität, die physikalisch-chemischen als auch die anwendungstechnischen Eigenschaften dieser Emulsionen hängen von der geschickten Auswahl des/der verwendeten funktionellen Siliciumtenside, der verwendeten ionischen Tenside und weitgehend vom Mengenverhältnis des hydrophoben zu hydrophilen Molekülteils

sowie vom pH-Wert ab.

Es ist dem Fachmann bekannt, daß speziell im Beton eine Alkali-Kieselsäure-Reaktion auftritt, wenn alkaliempfindliche, kieselsäurehaltige Zuschläge mit Alkalihydroxid reagieren. Oftmals werden über Taumittel (z. B. NaCl) die Alkalien von außen in den Beton eingetragen. Die durch die Alkali-Kieselsäure-Reaktion entstehenden Alkalsilicat-hydrat-Gele führen unter ungünstigen Umständen zu Rissen, Abplatzungen bis hin zum Zerfall des Betongefüges.

Insbesondere durch die erfindungsgemäßen Organosilanverbindungen enthaltenden Hydroemulsionen, denen man als alkalipuffernden Zusatzstoff 3-Sulfopropylsilantriol (Si285), bevorzugt vor dem Aufbringen auf die Baumaterialien bis zu einem pH-Wert von 3-5,5 zusetzt, läßt sich insbesondere Beton vorbeugend gegen die Alkali-Kieselsäure-Reaktion schützen.

Beispiel 1

Herstellung der Organosiliciumverbindungen gemäß Formel (II), nach dem erfindungsgemäßen Verfahren.

Allgemeine Arbeitsweise:

Das Alkoxysilan und das Tensid bzw. Tensidgemisch wird in äquimolaren Mengen oder einem Tensidüberschuß von 0,1 bis 5 Mol % vermischt und mit einer Säure, insbesondere Salzsäure, auf pH ≈ 5 eingestellt.

Man heizt auf Rückflußtemperatur auf, läßt die Reaktion ablaufen, wobei die Temperatur kontinuierlich abfällt. Nach dem Reaktionsende wird der gebildete Alkohol unter Vakuum abgezogen.

Man erhält im allgemeinen Ausbeuten von ≧ 97 %.

Es ist jedoch auch nach dem aus dem Stand der Technik bekannten Verfahren möglich, diese Verbindungen aus den entsprechenden Chlorsilanverbindungen herzustellen.

Je nachdem, welcher Anteil der Chloratome gegen ein Tensidmolekül bzw. einen Alkoxyrest ausgetauscht werden soll, setzt man entsprechende äquimolare Mengen bzw. vorzugsweise einen Überschuß von 0,1 bis 5 Mol % eines oder mehrerer Tenside oder eines Alkohols ein. Bezogen auf die Zahl der Chloratome ist der äquimolare Zusatz einer organischen Base (z.B. Triethylamin) für die Umsetzung hilfreich, aber nicht zwingend erforderlich. Das ausfallende Hychochlorid wird dann zur Abdestillation des inerten Lösungsmittels (z.B. Toluol) abfiltriert.

Die Tabellen 1 und 2 zeigen die nach dem erfindungsgemäßen Verfahren hergestellten im folgenden als Siliciumtenside bezeichneten Verbindungen.

Tabelle 1

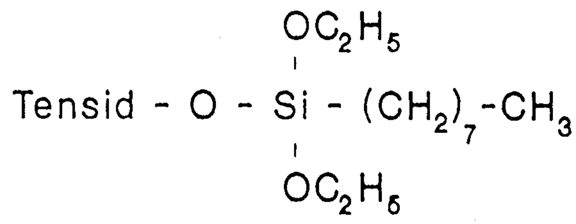

| Tensid | SL-Nomenklatur |
|---|---|
| $-(CH_2-CH_2O)_{10}-$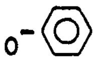$-C_8H_{17}$ | SL 51-0-12 |
| $-(CH_2-CH_2O)_{10}-C_{13}H_{27}$ | SL 51-0-14 |
| $-(CH_2-CH_2O)_8-$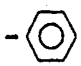$-C_9H_{19}$ | SL 51-0-16 |
| $-(CH_2-CH_2O)_6-(CH_2)_x-CH=CH-(CH_2)_x-CH_3$ | SL 51-0-17 |

Tabelle 2:

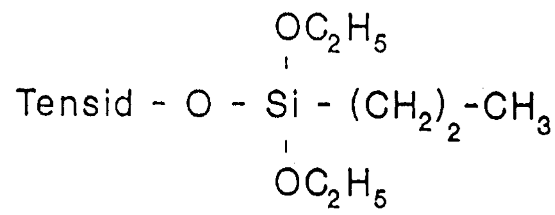

| Tensid | SL-Nomenklatur |
|---|---|
| $-(CH_2-CH_2O)_{10}-$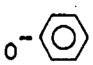$-C_8H_{17}$ | SL 51-0-11 |
| $-(CH_2-CH_2O)_8-C_{13}H_{27}$ | SL 51-0-13 |
| $-(CH_2-CH_2O)_{11}-$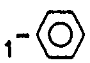$-C_9H_{19}$ | SL 51-0-15 |
| $-(CH_2-CH_2O)_{10}-C_{13}H_{27}$ | SL 51-0-18 |
| $-(CH_2-CH_2O)_5-(CH_2)_x-CH=CH-(CH_2)_x-CH_3$ ($x \mathrel{\widehat{=}} 6-10$) | SL 51-0-19 |

Beispiel 2

Ebenso wie die Verbindungen des Typs

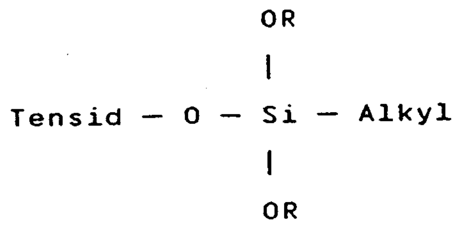

sind die mit zwei Tensidmolekülen substituierten Silane aus den entsprechenden Dichlorsilanen oder Dialkoxysilanen wie im vorgehenden Beispiel beschrieben herzustellen.

Tabelle 3 enthält die hergestellten Verbindungen des Typs

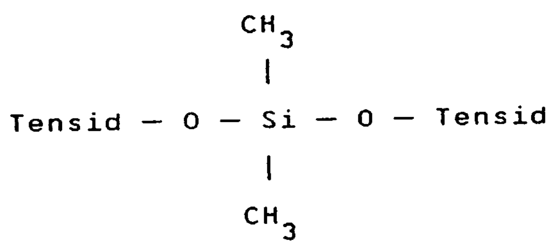

Tabelle 3:

$$\begin{array}{c} CH_3 \\ | \\ Tensid - O - Si - O - Tensid \\ | \\ CH_3 \end{array}$$

| Tensid | SL-Nomenklatur |
|---|---|
| $-(CH_2-CH_2O)_{10}-C_{13}H_{27}$ | SL 51-0-20 |
| $-(CH_2-CH_2O)_{10}-$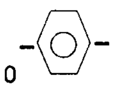$-C(CH_3)_2-CH_2-C(CH_3)_3$ | SL 51-0-21 |
| $-(CH_2-CH_2O)_6-$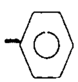$-C_9H_{19}$ | SL 51-0-22 |
| $-(CH_2-CH_2O)_5-(CH_2)_7-CH_3$ | SL 51-0-24 |
| $-(CH_2-CH_2O)_{10}-$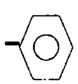$-C_9H_{19}$ | SL 51-0-27 |
| $-(CH_2-CH_2O)_{15}-$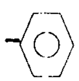$-C_9H_{19}$ | SL 51-0-41 |

Beispiel 3

In diesem Beispiel wird die Herstellung von Siliciumtensiden des Typs

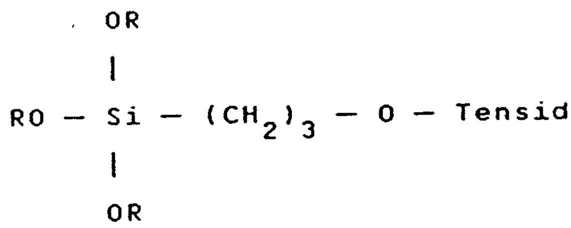

demonstriert.
Arbeitet man in Ethanol, löst man zuerst Natrium zur Bildung von Natriumethanolat und setzt anschließend bezogen auf das Alkalimetalldie äquimolare Menge des Tensids zu und heizt dann bevorzugt auf Rückflußtemperatur auf.
Nach ca. 2 h ist die Reaktion beendet, man kühlt ab und tropft 3-Chlorpropyltriethoxysilan in die klare Lösung. Anschließend heizt man auf 50 - 65 $^{0}$C auf. Nach 1 bis 2 h bei dieser Temperatur ist die Reaktion beendet. Nach dem Abkühlen wird das ausgefallene NaCL abfiltriert und der Alkohol durch Destillation abgetrennt. Die Umsetzungen sind vollständig.
In einer anderen Variante legt man das Tensid in einem inerten organischen Lösungsmittel, z. B. Toluol, vor und trägt anschließend das Natrium in etwa äquimolaren Mengen ein, um die Tensid-O-Na-Verbindung direkt herzustellen. Nach 1 bis 2 h bei 70 $^{0}$C bis 80 $_{0}$C ist diese Umsetzung beendet.
Man kühlt auf Raumtemperatur ab und tropft Chlorpropyltriethoxysilan in die klare Lösung. Anschließend heizt man auf 50 -65 °C auf. Nach ca 1 h bei dieser Temperatur ist die Reaktion beendet. Nach dem Abkühlen wird das ausgefallene NaCl abfiltriert und das Toluol unter Vakuum abdestilliert.

Tabelle 4:

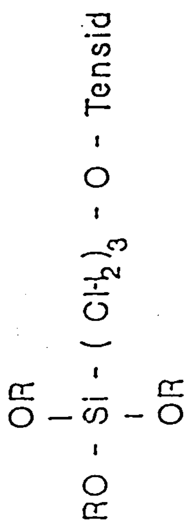

| Tensid | R | SL-Nomenklatur |
|---|---|---|
| $-(CH_2-CH_2O)_5-(CH_2)_7-CH_3$ | $CH_3-$ | SL 51-1-12 |
| $-(CH_2-CH_2O)_6-$ 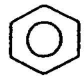 $-C_9H_{19}$ | $C_2H_5-$ | SL 51-2-14 |
| $-(CH_2-CH_2O)_{10}-$ 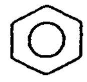 $-C_9H_{19}$ | $C_2H_5-$ | SL 51-2-15 |

Herstellung der Emulsion

Zur Herstellung setzt man die dem Fachmann bekannten Dispergiergerätes (Rotor-Stator-Systeme, Hochdruckhomogenisatoren) ein.

Beispiel 4: Herstellung einer Emulsion im Betrieb.

Einsatzstoffe:
- 40,00 % Organosilan (oder Organosilan-System) (= Formel I)
- 58,40 % VE-Wasser
- 1,25 % Silicumtensid (= Formel II)
- 0,35 % anionisches Tensid (Alkyl-sulfonate beispielsweise: Natrium-octylsulfonat)

(VE = Vollentsalzt)

Für die Herstellung der Emulsion werden folgende Apparate verwendet:
- Ansatzbehälter mit Rührwerk,

- Speisepumpe zur Beschickung des Hochdruckhomogenisators mit 2-stufiger Entspannungseinheit,
- Wärmetauscher zum Abkühlen der Emulsion auf 10-20°C.

Im Ansatzbehälter wird VE-Wasser und die Gesamtmenge an Emulgator (bzw. Emulgatorenpaar) unter Rühren vorgelegt.
Nach Zugabe des Organosilans wird der pH-Wert durch Zusatz von Natriumhydrogencarbonat auf pH 7,5 eingestellt.

Beispiel 5

Herstellung einer Emulslon im Labor

| | |
|---|---|
| Einwaage | 50 g Wasser |
| | 0,12 g $NaHCO_3$ (pH-Wert der Emulsion ~ 7,5) |
| | 1,37 g Siliciumtensid (Formel I ) |
| | 33.3 g Organosilan (Formel II) |

In der Reihenfolge der Auflistung werden die Komponenten nacheinander in einen 50 ml Reaktionskolben eingewogen und dann für 3 Minuten mit einem Ultraturrax (Rotor-Stator) bei 18000 Upm homogenisiert. Anschließend kann die Emulsion noch 1 min im Ultraschallbad unter Rühren (500 Upm) nachbehandelt werden.

| | |
|---|---|
| Aussehen der Emulsion: | milchig |
| Eigenschaften: | beliebig verdünnbar |

Die so hergestellten Emulsionen sind über mehrere Wochen stabil, d. h. es erfolgt keine Phasentrennung ("Rahmschichtbildung").
Tritt dies dann irgendwann auf, wird durch einfaches umrühren eine gebrauchsfertige Emulsion hergestellt, die keinerlei Wirkung verloren hat.

Die Rohemulsion wird mittels Speisepumpe zum Hochdruckhomogenisator gepumpt und dort bei 80 - 500 bar homogenisiert. Nach dem Abkühlen der Emulsion auf 10 - 20 °C wird nochmals bei 100 - 700 bar homogenisiert. Der Druckabbau in der 2. Druckstufe beträgt 20 %.
Nach erneutem Abkühlen auf Raumtemperatur wird die Emulsion abgefüllt.

| | |
|---|---|
| Aussehen der Emulsion: | milchig |
| Eigenschaften: | beliebig verdünnbar. |

Die so hergestellten Emulsionen sind über mehrere Monate stabil, d. h. es erfolgt keine Phasentrennung ("Rahmschichtbildung"). Tritt dies dann auf, wird durch einfaches Umrühren eine gebrauchsfertige Emulsion hergestellt, die keinerlei Wirkung verloren hat.
Bei einer bevorzugten Art der Emulsionsherstellung wird ein an sich bekanntes ionisches Tensid zugesetzt. Man benötigt dann einen wesentlich geringeren Energiebeitrag,um thermodynamisch stabile Dispersionen herzusteilten. In einer besonderen Ausführungsform werden in der Organosilan-Phase die ionischen, bevorzugt anionischen Tenside, in der Wasser-Phase die Silicium-funktionellen Tenside zugegeben.
Neben der Porosität der Baustoffe und der Sorgfalt, mit der die Anwendung dieser Emulsionen in der Praxis erfolgt, ist auch die Teilchengröße für ein hohes Penetrationsverhalten der Wirkstoffe verantwortlich. Durch Kombination der Si-funktionellen Tenside und ionischer Tenside werden Teilchen <1 µm erzielt.
Es ist dem Fachmann bekannt, daß der Eintrag von Gas (im allgemeinen Luft) während der Rohemulsionsherstellung das Standzeitverhalten nachteilig beeinflußt, sogar unter Umständen zur Zerstörung des Dispergiergerätes führen kann.

Daher besteht auch die Möglichkeit, die Eduktströme (Organosilan, Si-funktionelle Tensid/Wasser, ionische Tenside) direkt in den Homogenisator zu dosieren.

Anwendungstechnische Beurteilung

Die Steinprobekörper in der Größe 5 x 5 x 5 cm werden zunächst einige Wochen bei Normklima (23 °C, 50 % rel. Luftfeuchte) konditioniert und anschließend gewogen. 200 ml der erzeugten Organosilan-Emulsionen werden in einem 400 ml-Becherglas vorgelegt, je drei gewogene Probekörper zweimal im Abstand von einer halben Stunde für 1 min vollständig eingetaucht. Nach erfolgter Silanisierung lagert man die Steinprobekörper 14 Tage bei Raumtemperatur. Zur Ermittlung der Wasseraufnahme gibt man in Anlehnung an DIN 12 103 je 2 Proben in ein Wasserbad mit 5 cm überstehender Wassersäule und kontrolliert das Gewicht nach 10, 30, 60 min, 2, 4, 8 und 24 h. Zum Messen der Eindringtiefe werden die Probewürfel mit Hammer und Meißel geteilt und mit Wasser, das mit Tinte gefärbt ist, besprüht. Der Abperleffekt ist eine optische Prüfung und kann durch Eintauchen in Wasser in der Regel aber durch

Auftrag eines Wassertrophens mittels Pipette auf eine waagerechte Kontaktfläche geprüft werden.
Nach 15 Minuten wird der Wassertropfen abgeschüttelt und die Kontaktfläche beurteilt. Dabei bedeuten die Ziffern

1. keine Benetzung mit der Substratfläche
2. 50 %-ige Verteilung des Wassertropfens auf der Substratfläche ohne Dunkelfärbung
3. flächige Verteilung, d. h. vollständige Benetzung des Wassertropfens mit leichter Dunkelfärbung der Substratoberfläche
4. Wasser teilweise eingezogen unter starker Dunkelfärbung der Kontaktfläche.

Die Wasseraufnahme zeigt die Wirksamkeit der Hydrophobierung. Je weniger Wasser aufgenommen wird, desto besser ist die Hydrophobierung.
Die Eindringtiefe gibt Auskunft, wie tief ein Imprägniermittel im Stein wirksam ist.
Zur Verdeutlichung der positiven Eigenschaften der erfindungsgemäßen Emulsionen wurden Vergleichsversuche mit Produkten gemäß dem Stand der Technik vorgenommen. In Versuch 1 wurde eine käufliche Mikroemulsion auf Siloxanbasis (oligomere Alkoxysiloxane) eingesetzt, die siliciumfunktionelle Tenside (Silikontenside) der Struktur

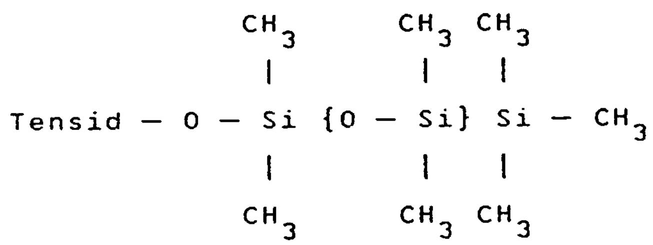

enthalten.
Es handelt sich dabei im allgemeinen um Copolymere des Polysiloxans mit einer oder mehreren Polyglycoletherketten. In Versuch 2 wurden eine käufliche Emulsion aus Organosilan und ein Gemisch der Tenside

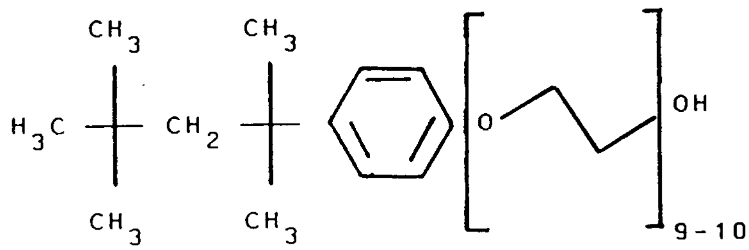

(1)

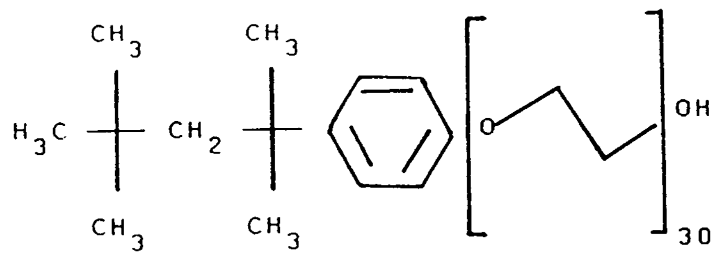

(2)

gemäß EP-A-340 816 eingesetzt.
Die Versuche wurden in zwei Konzentrationsstufen durchgeführt, die zeigen, daß die erfindungsgemäßen Emulsionen selbst bei geringer Wirkstoffkonzentration (5 %) in Hinblick auf die Wasseraufnahme und die Eindringtiefe deutlich bessere Ergebnisse zeigen als die Emulsionen nach dem Stand der Technik mit Wirkstoffkonzentrationen von 40 %.

Beispiel 4

| Versuch | Wirkstoff | Konzentration des Wirkstoffes (Gew. %) | Tensid(e) | Wasseraufnahme (%) nach 24 h | Eindringtiefe (mm) | Abperleffekt |
|---|---|---|---|---|---|---|
| 1 | Siloxane | 40 | Silicontenside | 0,98 | 2-3 | 1 |
| | | 10 | | 0,82 | 0,5-2 | 1-2 |
| 2 | $C_8H_7Si(OC_2H_5)_3$ | 40 | Tenside (1), | 1,57 | 7-9 | 2 |
| | | 5 | (2) | 0,87 | 1-3 | 4 |
| 3 | $C_8H_{17}Si(OC_2)H_5)_3$ | 40 | (SL 51-0-19) | 0,64 | 6-8 | 1-2 |
| | | 5 | | 0,65 | 3-6 | 2 |
| 4 | $C_8H_{17}Si(OC_2H_5)_3$ | 40 | (SL 51-0-22) | 0,75 | 4-7 | 1 |
| | | 5 | | 0,70 | 3-4 | 1-2 |
| 5 | $C_8H_{17}Si(OC_2H_5)_3$ | 40 | (SL 5-0-17) | 0,63 | 7-10 | 1 |
| | | 5 | | 0,60 | 3-5 | 2 |

Tabelle 5: Ergebnisse auf Kalksandstein (Blindprobe: Wasseraufnahme nach 24 h:12,30 %)

Beispiel 5

| Versuch | Wirkstoff | Konzentration des Wirkstoffes (Gew. %) | Tensid(e) | Wasseraufnahme (%) nach 24 h | Eindringtiefe (mm) | Abperleffekt |
|---|---|---|---|---|---|---|
| 6 | Siloxane | 10 | Silicontenside | 1,02 | 0-0,5 | 3 |
| 7 | $C_8H_{17}Si(OC_2H_5)_3$ | 10 | Tenside (1) (2) | 3,11 | 3-4 | 4 |
| 8 | $C_8H_{17}Si(OC_2H_5)_3$ | 10 | (SL 51-0-22) | 1,15 | 4-5 | 3-4 |
| 9 | $C_3H_7Si(OC_2H_5)_3$ $C_{16}H_{33}Si(OC_2H_5)_3$ 1:1 | 10 | (SL 51-0-35) | 0,6 | 3-5 | 2-3 |

Tabelle 6: Ergebnisse auf dem Höxter Sandstein (Blindprobe: Wasseraufnahme nach 24 h: 3,86 %)

Die Versuche 8 und 9 zeigen, daß selbst auf neutralen Substanzen, wie z. B. Höxter Sandstein, eine verbesserte Wirksamkeit erreicht werden kann, insbesondere dann, wenn auf eine Kombination von Silanen, die aus kurz- und langkettigen Alkylgruppen bestehen, zurückgegriffen werden kann.

Beispiel 6 Zementmörtel

Vor dem Imprägnieren mit der Emulsion werden die Mörtelwürfel bis zur Gewichtskonstanz getrocknet. In der Regel liegt die Trockenzeit bei 72 Std. und 105 °C. Die Gewichtskonstanz gilt als erreicht, wenn sich das Gewicht innerhalb von 24 Std. um nicht mehr als 0,1 % ändert. Nach einer Abkühlungszeit von 2 Std.

bei Raumtemperatur werden die Steine gewogen. Danach erfolgt die Applikation über 1 Minute in einem 400 ml-Becherglas mit 150 ml Imprägnierlösung. Nach einer Lagerung von 30 min bei Raumtemperatur wird die Behandlung wiederholt. Die Wasseraufnahme wird wie oben beschrieben bestimmt, ebenso die Eindringtiefe und der Abperleffekt.

| Versuch | Wirkstoff | Konzentration des Wirkstoffes (Gew. %) | Tensid(e) | Wasseraufnahme (%) nach 24 h | Eindringtiefe (mm) |
|---|---|---|---|---|---|
| 1 | Siloxane | 10 | Silicontenside | 0,76 | 0 - 0,5 |
| 2 | $C_8H_7Si(OC_2H_5)_3$ | 40)* | Tenside (1), | 1,01 | 6 - 8 |
| | | 10 | (2) | 0,49 | 1 - 2 |
| 3 | $C_8H_{17}Si(OC_2H_5)_3$ | 40 | (SL 51-0-19) | 0,50 | 5 - 9 |
| | | 10 | | 0,42 | 1 - 3 |
| 4 | $C_8H_{17}Si(OC_2H_5)_3$ | 40 | (SL 51-0-22) | 0,45 | 3 - 10 |
| | | 10 | | 0,43 | 1 - 5 |
| 5 | $C_8H_{17}Si(OC_2H_5)_3$ | 40 | (SL 51-0-17) | 0,38 | 4 - 6 |

Tabelle 7: : Ergebnisse auf Zementmörtel
(Blindprobe: Wasseraufnahme nach 24 h: 7,13 %)
* auf dem Stein fleckig

Beispiel 7

| Versuch | Wirkstoff | Konzentration des Wirkstoffes (Gew. %) | Tensid(e) | Wasseraufnahme (%) nach 24 h | Eindringtiefe (mm) |
|---|---|---|---|---|---|
| 1 | Siloxane | 10 | Silicontensid | 11,04 | 4-6 |
| 2 | $C_8H_{17}Si(OC_2H_5)_3$ | 10 | Tenside (1)<br>(2) | 9,60 | 4-10 |
| 3 | $C_8H_{17}Si(OC_2H_5)_3$ | 10 | (SL 51-0-22) | 8,50 | 6-10 |
| 4 | $C_3H_7Si(OC_2H_5)_3$<br>$C_{16}H_{33}Si(OC_2H_5)_3$ | 10 | (SL 51-0-35) | 9,31 | 5-10 |

Tabelle 8: Ergebnisse auf Gasbeton
(Blindprobe: Wasseraufnahme nach 24 h: 65,07 %)

Selbst auf einem sehr großporigen Baustoff, wie Gasbeton, konnte die Wasseraufnahme und Eindringtiefe gegenüber den käuflichen Emulsionen verbessert werden.

Beispiel 8

Unter Zusatz von basischen oder sauren Katalysatoren werden die hydrophoben Eigenschaften deutlich verbessert. Die Zugabe von 3-Sulfoproyltrihydroxysilan (Si 285)

$(HO)_3Si - CH_2CH_2CH_2 - SO_3H$

hat sich als besonders vorteilhaft herausgestellt. Durch leichtes Einrühren in die Emulsion direkt vor der Applikation wird der pH-Wert auf ~ 4 eingestellt.

| Versuch | Wirkstoff | Konzentration (Gew.-%) | Tensid | $H_2O$-Aufn. 24 h (%) |
|---|---|---|---|---|
| 1 | $C_3H_7Si(OC_2H_5)_3$ | 40 | (SL51-0-15) | 1,79 |
| | | 20 | | 5,03 |
| | | 10 | | 7,20 |
| 2 | $C_3H_7Si(OC_2H_5)_3$ (+Si 285) | 40 | (SL51-0-15) | 0,72 |
| | | 20 | | 0,73 |
| | | 10 | | 0,75 |

Tabelle 9 Ergebnisse auf Kalksandstein

(Blindprobe: Wasseraufnahme nach 24 h: : 11,97 %)

Selbst bei einer kurzkettigen Alkylgruppe wie in n-Propyltriethoxysilan ließen sich mit dem erfindungsgemäßen System mit Katalysator vergleichbar gute bis sehr gute Resultate erzielen.

## Patentansprüche

1. Wässrige, Organosiliciumverbindungen enthaltende Emulsionen zum Imprägnieren von anorganischen Materialien,die gegebenenfalls anionische Tenside und den pH-Wert puffernde Substanzen enthalten dadurch gekennzeichnet,
daß sie 1 bis zu 80 Gew.-% mindestens eines Alkoxysilans der allgemeinen Formel

$$(R_1O)_{4-(a+b)}\overset{\displaystyle (R_3)_a \atop |}{Si} - ((CH_2)_c-X)_b \qquad (I).$$

in der bedeuten

R₁: $C_1$-$C_3$-Alkyl
R₃: $C_1$-$C_{20}$-Alkyl, geradkettig oder verzweigt, insbesondere $C_1$-$C_{10}$-Alkyl, Phenyl
X: H, Cl, Br, J, $NH_2$, SCN, CN, $N_3$, NHR, $NR_2$, $^{\oplus}NR_3$, $-S_x-$, Aryl, Alkenyl,
a: 0,1
b: 1,2
c: eine ganze Zahl von 1 bis 6,

und 1 bis 20 Gew.-% einer Organosiliciumverbindung der allgemeinen Formel

$$(R_4)_{3-(m+n)} - \underset{\underset{\displaystyle (R_3)_m}{|}}{\overset{\overset{\displaystyle (R_2)_n}{|}}{Si}} - (CH_2)_p \ \{OCH_2-CH_2\}_r \ OR_5 \quad (II)$$

in der bedeuten:

$R_2$, $R_3$: gleich oder verschieden, $C_1$-$C_{20}$-Alkyl. geradkettig oder verzweigt, insbesondere $C_1$-$C_{10}$-Alkyl, Phenyl

$R_4$: $C_1$-$C_3$-Alkoxy.
$\{OCH_2\text{-}CH_2\}_r\ OR_5$,

$$[OCH_2-CH_2]_s-[CH_2-\underset{\underset{\displaystyle CH_3}{|}}{C}HO]_t\ [CH_2-CH_2O]_sH$$

$R_5$: H, $C_1$-$C_{20}$-Alkyl, $C_2$-$C_{36}$-Alkenyl, $C_5$-$C_8$-Cycloalkyl, $C_7$-$C_{36}$-Aralkyl.
wenn p = 0 und r = 0 entspricht $OR_5$:

$$-(OCH_2-CH_2]_s-[CH_2-\underset{\underset{\displaystyle CH_3}{|}}{C}HO]_t\ [CH_2 - CH_2\ O]_S\ H$$

m: 0,1,2

n: 0,1,2 , mit der Maßgabe, daß (m + n) = 1 oder 2 ist. wenn p = 0 ist, bei p ≠ 0 gilt (m + n) = 0,1 oder 2,

p: 0,1,2,3

r: eine ganze Zahl zwischen 0 und 50,
s = 3-50, t = 3-25

und Wasser
enthält.

**2.** Verfahren zur Herstellung von Organosiliciumverbindungen gemäß der allgemeinen Formel (II), in der p = 0 bedeutet,
dadurch gekennzeichnet,
daß man eine Verbindung der allgemeinen Formel

$$(R_6)_{4-(m+n)} - \underset{\underset{\displaystyle (R_3)_m}{|}}{\overset{\overset{\displaystyle (R_2)_n}{|}}{Si}} \qquad (III),$$

in der

$R_6$: $C_1$-$C_3$-Alkoxy entspricht und $R_2$, $R_3$, m und n die im Anspruch 1 angegebene Bedeutung

haben, mit einer reaktiven Wasserstoff enthaltenden Verbindung der allgemeinen Formel

$R_5$-O $\{CH_2$-$CH_2O\}_r$ H (IV),

in der $R_5$ und r die in Anspruch 1 angegebenen Bedeutungen haben, bei der Rückflußtemperatur des Reaktionsgemisches und einen pH-Wert zwischen 3,5 und 5,5, insbesondere ~ 5, umsetzt.

**3.** Verfahren zur Herstellung von Organosiliciumverbindungen der allgemeinen Formel (II), in der p = 1, 2 oder 3 ist, dadurch gekennzeichnet, daß man eine Verbindung der allgemeinen Formel

$$\begin{array}{c} (R_2)_n \\ | \\ (R_6)_{3-(m+n)} - Si - (CH_2)_p\text{-}X \\ | \\ (R_3)m \end{array} \quad (V),$$

in der $R_2$, $R_3$ , m, n, und p (außer p = 0) die in Anspruch 1 und $R_6$ die in Anspruch 2 angegebenen Bedeutungen haben und X Chlor entspricht, in einem inerten organischen Lösungsmittel mit einem Natriumalkoholat der allgemeinen Formel

$R_5$-O $\{CH_2$-$CH_2O\}_r$ Na (VI),

in der $R_5$ und r die in Anspruch 1 genannten Bedeutungen haben, bei 20 bis 100 °C umsetzt, anschließend das ausgefallene NaCl abfiltriert und das Lösungsmittel abzieht.

**4.** Verbindungen der allgemeinen Formel

$$\begin{array}{c} (R_2)_n \\ | \\ (R_4)_{3-(m+n)} - Si - (CH_2)_p \ \{OCH_2\text{-}CH_2\}_r \ OR_5 \\ | \\ (R_3)_m \end{array} \quad (II),$$

in der $R_2$, $R_3$, $R_5$, p und r die in Anspruch 1 angegebenen Bedeutungen besitzen und
bei p = 0 : (m + n) = 1
$R_4$ $C_1$-$C_3$-Alkoxy oder $\{OCH_2$-$CH_2\}_r$ $OR_5$
entspricht, und
bei p ≠ o : (m + n) = 0,1 oder 2
$R_4$ $C_1$-$C_3$ Alkoxy und/oder $\{OCH_2$-$CH_2\}_r$ $OR_5$
entspricht.

**5.** Verfahren zum Imprägnieren von Baumaterialien, dadurch gekennzeichnet, daß man die Emulsion gemäß Anspruch 1 unmittelbar vor dem Aufbringen auf die Baumaterialien auf einen pH-Wert von 3 - 5,5 einstellt, bevorzugt indem man 3-Sulfopropyltrihydroxysilan zusetzt, und mit

dieser Mischung die zu imprägnierenden Baumaterialien behandelt.

## Claims

**1.** Aqueous emulsions containing organosilicon compounds for the impregnation of inorganic materials, optionally containing anionic surfactants and substances which buffer the pH, characterised in that they contain 1 to 80% by weight of at least one alkoxysilane corresponding to the general formula

$$(R_1O)_{4-(a+b)} - \overset{\displaystyle (R_3)_a \atop |}{Si} - ((CH_2)_c\text{-}X)_b \qquad (I),$$

wherein

$R_1$ = $C_1$-$C_3$-alkyl,
$R_3$ = $C_1$-$C_{20}$-alkyl, straight chain or branched, in particular $C_1$-$C_{10}$-alkyl, phenyl,
X = H, Cl, Br, I, $NH_2$, SCN, CN, $N_3$, NHR, $NR_2$, $^{\oplus}NR_3$, $-S_x-$, aryl or alkenyl,
a = 0 or 1,
b = 1 or 2,
c = an integer from 1 to 6

and 1 to 20% by weight of an organosilicon compound corresponding to the general formula

$$(R_4)_{3-(m+n)} - \underset{\displaystyle | \atop (R_3)_m}{\overset{\displaystyle (R_2)_n \atop |}{Si}} - (CH_2)_p \ \{OCH_2\text{-}CH_2\}_r \ OR_5 \qquad (II)$$

wherein

| | |
|---|---|
| $R_2$ and $R_3$, | which may be identical or different, denote $C_1$-$C_{20}$-alkyl, straight chain or branched, in particular $C_1$-$C_{10}$-alkyl, phenyl, |
| $R_4$ | denotes $C_1$-$C_3$-alkoxy, $\{OCH_2\text{-}CH_2\}_r$ $OR_5$, |

$$[OCH_2\text{-}CH_2]_s - [CH_2 - \underset{\displaystyle | \atop CH_3}{C}HO]_t \ [CH_2\text{-}CH_2O]_sH$$

| | |
|---|---|
| $R_5$ | denotes H, $C_1$-$C_{20}$-alkyl, $C_2$-$C_{36}$-alkenyl, $C_5$-$C_8$-cycloalkyl or $C_7$-$C_{36}$-aralkyl; when p = 0 and r = 0, $OR_5$ stands for |

$$-[OCH_2\text{-}CH_2]_s\text{-}[CH_2\text{-} \underset{\displaystyle | \atop CH_3}{C}HO]_t \ [CH_2\text{-}CH_2O]_sH$$

m = 0, 1 or 2
n = 0, 1 or 2
on condition that when p = 0, then (m + n) = 1 or 2
and when p ≠ 0 then (m + n) = 0, 1 or 2;
p = 0, 1, 2, 3
r = an integer between 0 and 50
s = 3-50, t = 3-25

and water.

2. A process for the preparation of organosilicon compounds corresponding to the general formula (II) in which p = 0, characterised in that a compound corresponding to the general formula

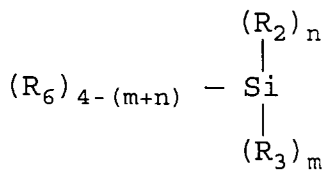

(III)

wherein
$R_6$ denotes $C_1$-$C_3$-alkoxy and $R_2$, $R_3$, m and n have the meanings given in claim 1, is reacted with a compound containing reactive hydrogen corresponding to the general formula

$R_5$-O $\{CH_2$-$CH_2O\}_r$ H (IV)

in which $R_5$ and r have the meanings given in claim 1, at the reflux temperature of the reaction mixture and at a pH between 3.5 and 5.5, in particular at pH ~ 5.

3. A process for the preparation of organosilicon compounds corresponding to the general formula (II) in which p = 1, 2 or 3, characterised in that a compound corresponding to the general formula

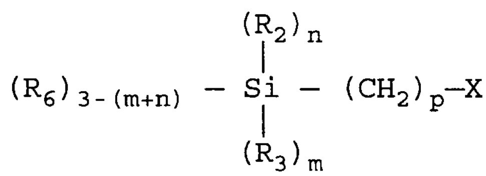

(V)

in which $R_2$, $R_3$, m, n and p (with the exception of p = 0) have the meanings given in claim 1 and $R_6$ has the meaning given in claim 2, and X stands for chlorine, is reacted at 20 to 100°C in an inert organic solvent with a sodium alcoholate corresponding to the general formula

$R_5$-O $\{CH_2$-$CH_2O\}_r$ Na (VI)

in which $R_5$ and r have the meanings given in claim 1, and the precipitated NaCl is then filtered off and the solvent is evaporated off.

4. Compounds corresponding to the general formula

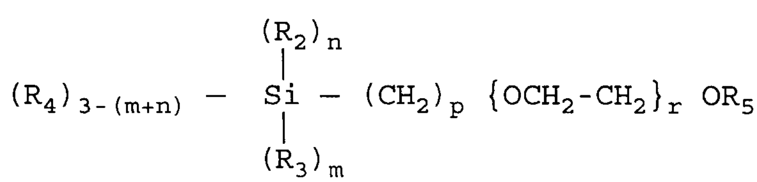

(II)

in which $R_2$, $R_3$, $R_5$, p and r have the meanings given in claim 1, and
when p = 0 then (m + n) = 1
$R_4$ stands for $C_1$-$C_3$-alkoxy or $\{OCH_2$-$CH_2\}_rOR_5$, and when
p ≠ 0, then (m + n) = 0, 1 or 2,
$R_4$ stands for $C_1$-$C_3$-alkoxy and/or $\{OCH_2$-$CH_2\}_r$ $OR_5$.

5. A process for the impregnation of building materials, characterised in that the emulsion according to claim 1 is adjusted to a pH of 3 to 5.5 immediately before its application to the building materials, preferably by the addition of 3-sulphopropyl-trihydroxysilane, and the building materials to be impregnated are treated with said mixture.

## Revendications

1. Emulsionsaqueuses contenant des composés d'organosilicium pour imprégner des matières minérales, qui contiennent éventuellement des agents tensio-actifs anioniques et des substances tamponnant la valeur du pH, caractérisées en ce qu'elles contiennent 1 à 80 % en poids d'au moins un alkoxysilane de formule générale :

$$(R_1O)_{4-(a+b)}\overset{(R_3)_a}{\overset{|}{Si}} - ((CH_2)_c - X)_b \qquad (I)$$

dans laquelle :
$R_1$ est un groupe alkyle en $C_1$-$C_3$
$R_3$ est un groupe alkyle en $C_1$-$C_{20}$, à chaîne droite ou ramifiée, en particulier un groupe alkyle en $C_1$-$C_{10}$, un groupe phényle,
X désigne un groupe H, Cl, Br, I, $NH_2$, SCN, CN, $N_3$, NHR, $NR_2$, $^{\oplus}NR_3$, $-S_x-$, aryle, alcényle,
a est égal à 0, 1
b est égal à 1, 2
c est un nombre entier de 1 à 6,
et 1 à 20 % en poids d'un composé d'organosilicium de formule générale :

$$(R_4)_{3-(m+n)} - \underset{(R_3)_m}{\underset{|}{\overset{(R_2)_n}{\overset{|}{Si}}}} - (CH_2)_p \{OCH_2-CH_2\}_r \; OR_5 \qquad (II)$$

dans laquelle :
$R_2$, $R_3$ sont égaux ou différents et représentent un groupe alkyle en $C_1$-$C_{20}$ à chaîne droite ou ramifiée, en particulier un groupe alkyle en $C_1$-$C_{10}$, un groupe phényle,
$R_4$ est un groupe alkoxy en $C_1$-$C_3$,
$\{OCH_2-CH_2\}_r \; OR_5$,

$$[OCH_2-CH_2]_s-[CH_2-\underset{CH_3}{\underset{|}{C}}HO]_t \; [CH_2-CH_2O]_sH$$

$R_5$ est H, un groupe alkyle en $C_1$-$C_{20}$, alcényle en $C_2$-$C_{36}$, cycloalkyle en $C_5$-$C_8$, aralkyle en $C_7$-$C_{36}$, lorsque p = 0 et r = 0, $OR_5$ correspond à :

$$-(OCH_2-CH_2)_s - [CH_2-\underset{CH_3}{\underset{|}{C}}HO]_t \; [CH_2 - CH_2O]_s \; H$$

m est égal à 0, 1, 2,
n est égal à 0, 1, 2,
à condition que (m + n) = 1 ou 2,

lorsque p = 0, et que, lorsque p ≠ 0, (m + n) = 0, 1 ou 2
p est égal à 0, 1, 2, 3,
r est un nombre entier entre 0 et 50,
s est égal à 3-50, t est égal à 3-25,
et de l'eau.

**2.** Procédé de préparation de composés d'organosilicium selon la formule générale (II), dans laquelle p = 0, caractérisé en ce qu'on fait réagir un composé de formule générale :

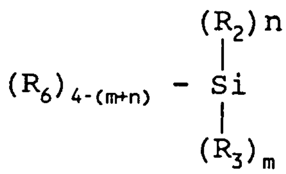

(III)

dans laquelle :
$R_6$ est un groupe alkoxy en $C_1$-$C_3$ et $R_2$, $R_3$, m et n ont les significations indiquées dans la revendication 1, avec un composé contenant de l'hydrogène réactif de formule générale :

$R_5$-O $\{CH_2\text{-}CH_2O\}_r$ H (IV)

dans laquelle $R_5$ et r ont les significations indiquées dans la revendication 1,
à la température de reflux du mélange réactionnel et à une valeur du pH comprise entre 3,5 et 5,5, en particulier ~5.

**3.** Procédé de préparation de composés d'organosilicium de formule générale (II), dans laquelle p = 1, 2 ou 3, caractérisé en ce qu'on fait réagir un composé de formule générale :

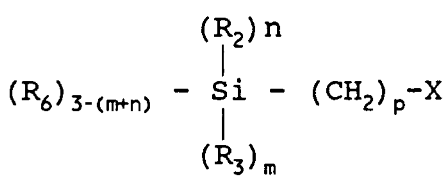

(V)

dans laquelle $R_2$, $R_3$, m, n et p (en dehors de p = 0) ont les significations données dans la revendication 1 et $R_6$ a la signification donnée dans la revendication 2, et X correspond à du chlore, dans un solvant organique inerte avec un alcoolate de sodium de formule générale :

$R_5$-O $\{CH_2\text{-}CH_2O\}_r$ Na (VI)

dans laquelle $R_5$ et r ont les significations indiquées dans la revendication 1,
à une température de 20 à 100 °C, puis on sépare par filtration le NaCL précipité et on extrait le solvant.

**4.** Composés de formule générale :

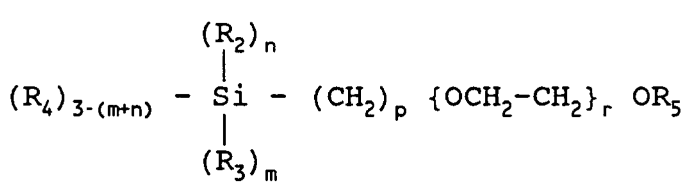

(II)

dans laquelle $R_2$, $R_3$, $R_5$, p et r ont les significations indiquées dans la revendication 1 et dans laquelle pour p = 0 : (m + n) = 1
$R_4$ est un groupe alkoxy en $C_1$-$C_3$ ou correspond à un groupe $\{OCH_2\text{-}CH\}_r$ $OR_5$ et
lorsque p ≠ 0 : (m + n) = 0, 1 ou 2
$R_4$ correspond à un groupe alkoxy en $C_1$-$C_3$ et/ou à un groupe $\{OCH_2\text{-}CH_2\}_r$ $OR_5$.

**5.** Procédé d'imprégnation de matériaux de construction, caractérisé en ce qu'on règle l'émulsion selon la revendication 1 directement avant l'application sur les matériaux de construction à une valeur de pH de 3 à 5,5, de préférence en ajoutant du 3-sulfopropyl trihydroxysilane, et on traite les matériaux de construction à imprégner à l'aide de ce mélange.